# EUROPÄISCHE PATENTSCHRIFT

(11) **EP 3 763 605 B1**
(45) Veröffentlichungstag und Bekanntmachung des Hinweises auf die Patenterteilung: **28.09.2022**
(21) Anmeldenummer: 20183252.4
(22) Anmeldetag: 30.06.2020
(51) Int. Cl.: B62D 25/18, B62D 25/16

(54) **TRAKTOR MIT RADHAUS**
TRACTOR WITH WHEELHOUSE
TRACTEUR DOTÉ D'UN PASSAGE DE ROUE

(30) Priorität: 12.07.2019 DE 102019210327
(43) Veröffentlichungstag der Anmeldung: 13.01.2021
(73) Patentinhaber: Deere & Company, Moline, IL 61265 (US)
(72) Erfinder: Kahnert, Thomas, 68163 Mannheim (DE)
(74) Vertreter: Dehnhardt, Florian Christopher

(56) Entgegenhaltungen:
- EP-A2- 0 672 577
- EP-A2- 1 288 114
- JP-A- 2010 264 927

## Beschreibung

Die Erfindung betrifft einen Traktor mit einem Radhaus im Bereich einer entlang einer Querrichtung verlaufenden Hinterachse des Traktors.

Bei Traktoren besteht insbesondere im Bereich der Hinterachse und deren Radhäusern das Problem, dass sich dort durch unterschiedliche Arbeitseinsätze und Witterungsbedingungen Schmutz, Erde und dergleichen in nicht unerheblichem Maße ansammeln. Dies erfordert entsprechende Reinigungsarbeiten am Traktor.

Die EP 1 288 114 A2 offenbart einen Traktor gemäß dem Oberbegriff des Anspruchs 1.

Der vorliegenden Erfindung liegt die Aufgabe zugrunde, vorgenannte Reinigungsarbeiten mit einfachen technischen Mitteln zu reduzieren.

Diese Aufgabe wird durch einen Traktor mit den Merkmalen des Patentanspruchs 1 gelöst.

Weitere vorteilhafte Ausgestaltungen des erfindungsgemäßen Traktors gehen aus den Unteransprüchen hervor.

Gemäß Patentanspruch 1 weist der Traktor eine Kabine für den Fahrer und eine Tragstruktur auf. An der Tragstruktur ist eine entlang einer Querrichtung des Traktors verlaufende Hinterachse gelagert. Ein kabinenseitiger Abschnitt des Traktors und ein tragstrukturseitiger Abschnitt des Traktors begrenzen im Bereich der Hinterachse ein sogenanntes Radhaus, welches mit Abstand ein Hinterrad der Hinterachse aufnimmt. Die Begrenzungsflächen des Radhauses bieten einen Spritzschutz gegenüber der Kabine und weiteren Bestandteilen des Traktors sowie gegenüber der Umgebung. Das Radhaus weist an einzelnen Begrenzungsflächen mindestens einen Spalt auf, der am Traktor einen Durchgang, Hohlraum, Freiraum, Aufnahmeraum oder dergleichen bildet. Dieser Spalt ist mittels einer Abdeckung zumindest in Querrichtung wirksam abgedeckt.

Die Abdeckung kann auch in weitere Raumrichtungen des Traktors, insbesondere in einer parallel zur Fahrtrichtung des Traktors verlaufenden Längsrichtung, wirksam sein. Mit anderen Worten kann die Abdeckung insbesondere auch einen Spalt des Radhauses in Längsrichtung wirksam abdecken.

Somit verhindert die Abdeckung unerwünschte Ansammlungen von Schmutz, Schlamm, Erde und dergleichen im Bereich des Spaltes. Im Bereich des Spaltes in Querrichtung zugängliche Funktionsteile (z.B. elektrische/elektronische Komponenten, Ventile, Leitungen) des Traktors bleiben deshalb auf kostengünstige Weise vor Schmutzansammlungen geschützt. Dies reduziert notwendige Wartungs- und Reinigungsarbeiten am Traktor. Außerdem bietet die Abdeckung einen verbesserten Schutz der Funktionsteile vor etwaigen mechanischen Beschädigungen. Überdies trägt die Abdeckung auch zu einem reduzierten Geräuschpegel in der Kabine bei.

Mit "kabinenseitiger" Abschnitt ist insbesondere ein Abschnitt der Kabine selbst oder ein Abschnitt des Traktors gemeint, der mit der Kabine des Traktors fest und ggf. auch wieder lösbar verbunden ist. Mit "tragstrukturseitiger" Abschnitt ist insbesondere ein Abschnitt der Tragstruktur (z.B. Chassis, Rahmen) selbst oder ein Abschnitt des Traktors gemeint, der mit der Tragstruktur des Traktors fest und ggf. auch wieder lösbar verbunden ist.

Die Abdeckung ist vorzugsweise lösbar, d.h. wieder abnehmbar an dem Traktor befestigt, so dass die Abdeckung bei Bedarf montagefreundlich austauschbar ist und Funktionsteile im Bereich des Spaltes beispielsweise im Wartungs- oder Reparaturfall ebenfalls montagefreundlich zugänglich sind. Für die lösbare Befestigung werden beispielsweise Rast-, Klemm- oder Schraubverbindungen verwendet.

Die Abdeckung kann je nach Ausführungsform der Abdeckung selbst und abhängig von den konstruktionsmäßigen Verhältnissen im Bereich des Radhauses vorteilhaft kabinenseitig und/oder tragstrukturseitig befestigt sein. Hierdurch können montagefreundliche Einbauverhältnisse für die Abdeckung berücksichtigt werden. Außerdem können unerwünschte mechanische Beanspruchungen der Abdeckung bei Relativbewegungen zwischen der Kabine und der Tragstruktur vermieden werden.

Vorteilhaft weist die Abdeckung mehrere Abdeckungsteile auf, welche einzeln kabinenseitig und/oder tragstrukturseitig befestigt werden. Dies unterstützt eine flexible geometrische Anpassung der Abdeckung auch bei komplizierten Einbauverhältnissen im Bereich des Radhauses. Bei einer etwaigen Wartung oder Reparatur der Abdeckung muss zeit- und ressourcensparend nur der betroffene Teil selbst demontiert und gehandhabt werden. Darüber hinaus kann die Abdeckung auch einfacher an gewünschte spezifische Merkmale für den Betriebseinsatz angepasst werden, indem einzelne Abdeckungsteile beispielsweise aus unterschiedlichen Werkstoffen hergestellt werden.

Bezüglich der Werkstoffeigenschaften der Abdeckungsteile ist es vorteilhaft, wenn mindestens ein Abdeckungsteil elastisch ausgebildet ist. Hierdurch können Wartungs- und Reparaturarbeiten an der Abdeckung und im Bereich des Radhauses zeitsparend durchgeführt werden, indem einzelne Abdeckungsteile im befestigen Zustand, also im Montagezustand verbleiben können und lediglich temporär umgebogen oder weggebogen werden.

In einer bevorzugten Ausführungsform korrespondieren ein kabinenseitig befestigtes Abdeckungsteil und ein tragstrukturseitig befestigtes Abdeckungsteil derart miteinander, dass sie entlang einer Hochrichtung des Traktors in gegenseitiger Überlappung angeordnet sind. Hierdurch können unerwünschte Ansammlungen von Schmutz und dergleichen im Bereich des Radhaus-Spaltes auch bei Relativbewegungen der Kabine in Hochrichtung relativ zur Tragstruktur vermieden werden. Die Überlappung ist insbesondere derart dimensioniert, dass selbst bei einer maximal möglichen Hubbewegung der Kabine in Hochrichtung bezüglich der Tragstruktur die Abdeckungswirkung der Abdeckung gewährleitstet ist.

In einer weiteren bevorzugten Ausführungsform sind im Montagezustand die Abdeckung oder einzelne Abdeckungsteile zumindest teilweise formschlüssig an einem kabinenseitigen und/oder tragstrukturseitigen Bestandteil des Traktors angeordnet. Diese formschlüssige Anordnung ermöglicht einen raumsparenden Aufbau der Abdeckung und vermeidet montagefreundlich etwaige fehlerhafte Positionierungen der Abdeckung.

Weiter vorzugsweise trägt ein Abdeckungsteil ein Kupplungselement, welches mit einem Gegenkupplungselement nach Art einer in Längsrichtung des Traktors wirksamen mechanischen Kupplung korrespondiert. Dabei ist das Gegenkupplungselement am Traktor bereits in einer fixierten Position, insbesondere tragstrukturseitig oder an einem anderen Abdeckungsteil befestigt. Das Gegenkupplungselement wirkt somit als eine Montagehilfe für eine fehlerfreie Montage und mechanisch stabile Befestigung desjenigen Abdeckungsteiles, welches das Kupplungselement trägt. Zusätzliche Befestigungsmittel (z.B. kabinenseitige oder tragstrukturseitige Schraubverbindung) für das ein Kupplungselement tragende Abdeckungsteil können wegen der Kupplung auf ein Mindestmaß reduziert werden.

Die vorgenannte mechanische Kupplung ist insbesondere nach Art einer Formschlussverbindung ausgebildet. Beispielsweise ist das Gegenkupplungselement im Querschnitt etwa rechteckig und entlang der Längsrichtung des Traktors dem Kupplungselement zugewandt konisch verjüngt ausgebildet. Das korrespondierende Kupplungselement ist dann geometrisch als Negativrelief nach Art eines sich in Längsrichtung konisch aufweitenden Rahmenteiles ausgebildet.

Vorzugsweise ist eine Beweglichkeit der Abdeckung oder einzelner Abdeckungsteile entlang der Querrichtung des Traktors begrenzt. Diese Bewegungsbegrenzung trägt dazu bei, etwaige Ansammlungen von Schmutz und dergleichen zwischen der Abdeckung und dem Bereich des Spaltes am Radhaus zu vermeiden. Zur Realisierung einer mechanisch stabilen Bewegungsbegrenzung weist der Traktor insbesondere ein tragstrukturseitig befestigtes Begrenzungselement mit einem etwa lotrecht zur Querrichtung des Traktors ausgerichteten Begrenzungsanschlag auf.

Für eine wirksame Bewegungsbegrenzung ist vorzugsweise vorgesehen, dass der tragstrukturfeste Begrenzungsanschlag eine etwa lotrecht zur Querrichtung des Traktors ausgerichtete Begrenzungsplatte flankiert, welche mit mindestens einem Abdeckungsteil fest und ggf. wieder lösbar verbunden ist. Der unbewegliche Begrenzungsanschlag wirkt dann als stabiler Widerstand gegen solche Bewegungen der Begrenzungsplatte und somit auch des jeweiligen Abdeckungsteiles in Querrichtung, welche eine definierte Strecke überschreiten würden.

In einer bevorzugten Ausführungsform weist die Begrenzungsplatte eine etwa in Hochrichtung des Traktors verlaufende Plattenaussparung auf, welche das Begrenzungselement für eine Relativbeweglichkeit zwischen der Begrenzungsplatte und dem Begrenzungselement etwa entlang der Hochrichtung beweglich umgibt. Hierdurch kann ein kabinenseitig befestigter Teil der Abdeckung Schwenkbewegungen der Kabine relativ zur Tragstruktur behinderungs- und beschädigungsfrei mitmachen.

Etwaige Ansammlungen von Schmutz und dergleichen im Bereich der vorgenannten Plattenaussparung werden vorzugsweise kostengünstig dadurch verhindert, dass die Begrenzungsplatte und insbesondere deren Plattenaussparung in Querrichtung wirksam von einer Deckplatte abgedeckt sind. Dabei sind die Begrenzungsplatte und die Deckplatte miteinander lösbar verbunden und klemmfixieren nach Art zweier Klemmbacken zwischen sich mindestens ein Abdeckungsteil. Hierdurch wird auch eine mechanisch stabile Verbindung zwischen dem jeweiligen Abdeckungsteil und der zugeordneten Begrenzungsplatte unterstützt.

Der erfindungsgemäße Traktor wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine Seitenansicht eines Radhauses an der Hinterachse eines Traktors gemäß dem Stand der Technik mit Schmutzansammlungen im Bereich des Radhauses,
- Fig. 2: eine perspektivische Ansicht des Radhauses gemäß Fig. 1 mit einer erfindungsgemäßen Abdeckung,
- Fig. 3: eine perspektivische Ansicht eines dem Radhaus gemäß Fig. 2 in Querrichtung gegenüberliegenden Radhauses mit der erfindungsgemäßen Abdeckung in einer weiteren Ausführungsform,
- Fig. 4: eine perspektivische Explosionsdarstellung zweier einzelner Abdeckungsteile der Abdeckung gemäß Fig. 2,
- Fig. 5: eine perspektivische Darstellung mehrerer Abdeckungsteile der Abdeckung gemäß Fig. 3 und zugehörigen Montageteilen im Bereich des Details VI, und
- Fig. 6: eine vergrößerte perspektivische Darstellung der Montageteile des Details VI gemäß Fig. 5.

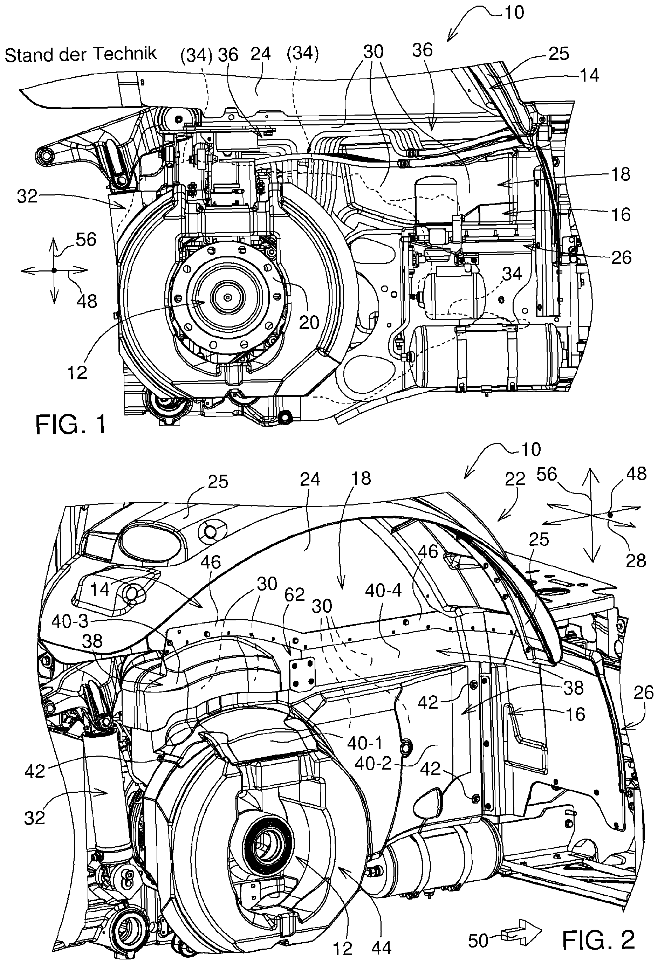

Fig. 1 zeigt einen Ausschnitt eines Traktors 10 im Bereich seiner Hinterachse 12 gemäß dem Stand der Technik. Ein kabinenseitiger Abschnitt 14 des Traktors 10 und ein tragstrukturseitiger Abschnitt 16 des Traktors 10 begrenzen im Bereich der Hinterachse 12 ein Radhaus 18 zur Aufnahme eines hier nicht dargestellten Hinterrades. Letzteres wird über seine Felge in üblicher Weise an einen Radflansch 20 der Hinterachse 12 montiert. Das dargestellte Radhaus 18 bietet insbesondere einen Spritzschutz gegenüber einer Kabine 22 des Traktors 10 und der Umgebung, z.B. auch Personen.

Die Kabine 22 weist unter anderem eine Seitenwand 24 auf, mit der ein Kotflügel 25 oder Schutzblech verbunden ist. Die Kabine 22 ist auf hier nicht im Einzelnen dargestellte Weise an einer Tragstruktur 26 des Traktors 10 beweglich oder unbeweglich gelagert. Aufgrund der konstruktionsmäßigen Ausgestaltung der Kabine 22 und der Tragstruktur 26 im Bereich der Hinterachse 12 weist das Radhaus 18 gemäß Fig. 1 einen in einer Querrichtung 28 des Traktors 10 zugänglichen Spalt 30 auf. Im Bereich dieses offenen Spaltes 30 und angrenzenden Bereichen (z.B. eines Heckkrafthebers 32) kann sich deshalb im Arbeitseinsatz des Traktors 10 eine Ansammlung 34 von Schmutz, Schlamm, Erde und dergleichen bilden. Dies erfordert entsprechende Reinigungsarbeiten, z.B. an dem Heckkraftheber 32 und an Bauteilen des Traktors 10 im Bereich des Spaltes 30, wie etwa dort verlaufenden elektrischen und/oder hydraulischen Leitungen 36.

Um derartige Reinigungsarbeiten zu vermeiden oder zumindest zu reduzieren, ist der Spalt 30 gemäß Fig. 2 mit einer Abdeckung 38 in Querrichtung 28 wirksam abgedeckt. Die Abdeckung 38 schließt den Spalt 30 zumindest teilweise. Entsprechend ist der Spalt 30 in Querrichtung 28 gar nicht oder nur noch teilweise geöffnet. Mit anderen Worten kann entlang der Querrichtung 28 signifikant weniger oder gar keine Ansammlung 34 von Schmutz und dergleichen in den Spalt 30 gelangen.

Die Abdeckung 38 ist einerseits teilweise kabinenseitig und andererseits teilweise tragstrukturseitig lösbar befestigt. Dabei weist die Abdeckung 38 mehrere Abdeckungsteile auf, beispielsweise die Abdeckungsteile 40-1, 40-2, 40-3, 40-4 gemäß Fig. 2.

Die Abdeckungsteile 40-1 und 40-2 sind jeweils tragstrukturseitig mittels einer oder mehrerer Fixierschrauben 42 lösbar befestigt. Vorzugsweise ist das Abdeckungsteil mittels lediglich einer Fixierschraube 42 befestigt, während das Abdeckungsteil 40-2 mittels der zwei sichtbaren Fixierschrauben 42 und weiterer Fixierschrauben 42 befestigt ist, welche in der Ansicht gemäß Fig. 2 von einem die Hinterachse 12 umgebenden Öltank 44 verdeckt sind. Dieser Öltank 44 enthält Hydrauliköl für ein Hinterachs-Verteilergetriebe.

Die Abdeckungsteile 40-3 und 40-4 sind an einer oder mehreren Fixierleisten 46 lösbar oder unlösbar befestigt, beispielsweise mittels Fixierschrauben 42. Die Fixierleiste(n) 46 selbst wiederum ist/sind kabinenseitig lösbar oder unlösbar befestigt, beispielsweise ebenfalls mittels Fixierschrauben 42.

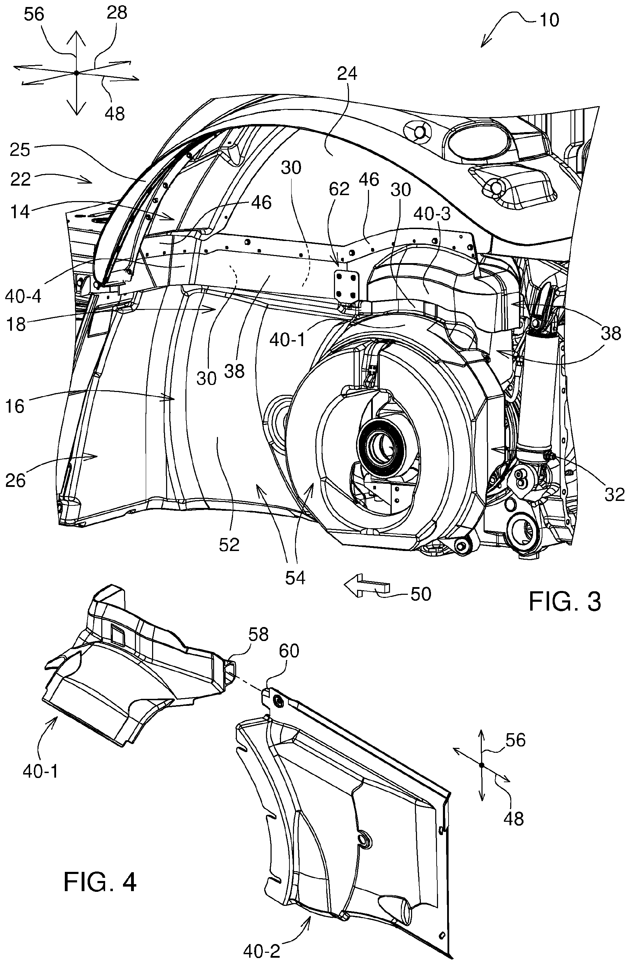

Das dem Öltank 44 zugeordnete Radhaus 18 befindet sich entlang der Querrichtung 28 rechts, wenn die Blickrichtung einer parallel zur Längsrichtung 48 des Traktors 10 ausgerichteten Vorwärtsfahrtrichtung 50 entspricht. Das dem Öltank 44 in Querrichtung 28 gegenüberliegende Radhaus 18 ist mit einer Abdeckung 38 abgedeckt, welche im Gegensatz zur Ausführung gemäß Fig. 2 kein Abdeckungsteil 40-2 aufweist. Dies liegt daran, dass an dem links angeordneten Radhaus 18 gemäß Fig. 3 eine Außenwand 52 eines Brennstofftanks 54 des Traktors 10 angeordnet ist. Bei der Abdeckung 38 gemäß Fig. 2 ersetzt das Abdeckungsteil 40-2 gewissermaßen die Außenwand 52 gemäß Fig. 3.

Die Abdeckung 38 ist im Montagezustand zumindest teilweise formschlüssig an einem kabinenseitigen Abschnitt 14 und/oder an einem tragstrukturseitigen Abschnitt 16 angeordnet. Die Formschlüssigkeit unterstützt eine fehlerfreie Positionierung der Abdeckung 38 am Radhaus 18 bzw. an dessen Spalt 30. Hierbei liegt das Abdeckungsteil 40-1 formschlüssig an einer Außenfläche des Öltanks 44 an (Fig. 2). Bei der Ausführung gemäß Fig. 3 liegt das Abdeckungsteil 40-1 formschlüssig an einer Außenfläche des Brennstofftanks 54 an.

Die Abdeckungsteile 40-3, 40-4 sind vorzugsweise aus einem elastischen Material (z.B. gummiartige Formteile oder Meterware) hergestellt. Die Abdeckungsteile 40-1, 40-2 sind vorzugsweise aus einem plastischen Material (z.B. Kunststoff) hergestellt. Eine elastische Ausgestaltung des Abdeckungsteiles 40-3 ermöglicht bedarfsweise eine einfache Demontage des Abdeckungsteiles 40-1, indem das elastische Abdeckungsteil 40-3 etwa entlang der Querrichtung 28 weggebogen wird, so dass das Abdeckungsteil 40-1 für eine Demontage entlang der Längsrichtung 48 befreit ist.

Das kabinenseitig befestigte Abdeckungsteil 40-3 und das tragstrukturseitig befestigtes Abdeckungsteil 40-1 sind entlang einer Hochrichtung 56 des Traktors 10 in gegenseitiger beweglicher Überlappung angeordnet. Hierdurch bleibt der Spalt 30 auch geschlossen, wenn sich aufgrund der Fahrbedingungen extreme Relativbewegungen zwischen der Kabine 22 und der Tragstruktur 26 entlang der Hochrichtung 56 ergeben. Die Hochrichtung 56 ist etwa lotrecht zur Querrichtung 28 und zur Längsrichtung 48 angeordnet.

In Fig. 4 ist erkennbar, dass das Abdeckungsteil 40-1 ein Kupplungselement 58 trägt. Das Kupplungselement 58 ist nach Art eines etwa rechteckigen Rahmens ausgebildet, welcher sich in Längsrichtung 48 dem Abdeckungsteil 40-2 zugewandt konisch aufweitet. Das Kupplungselement 58 korrespondiert mit einem Gegenkupplungselement 60 nach Art einer in Längsrichtung 48 wirksamen mechanischen Kupplung. Das Gegenkupplungselement 60 greift im Montagezustand der Abdeckung 38 etwa formschlüssig in den Hohlraum des rahmenartigen Kupplungselementes 58 ein. Hierzu ist das zapfenartige Gegenkupplungselement 60 dem Kupplungselement58 zugewandt konisch verjüngt ausgebildet. Die Kupplung dient als eine Montagehilfe für eine fehlerfreie Positionierung des Abdeckungsteiles 40-1. Hierzu wird zunächst das Abdeckungsteil 40-2 tragstrukturseitig befestigt, so dass das Gegenkupplungselement 60 am Traktor unbeweglich fixiert ist.

Bei der Abdeckung 38 gemäß Fig. 3 ist das Gegenkupplungselement 60 wegen des nicht vorhandenen Abdeckungsteiles 40-2 an der Tragstruktur 26 selbst, insbesondere an der Außenwand 52 befestigt und somit ebenfalls am Traktor 10 fixiert. Das an einer Außenfläche des Brennstofftanks 54 anzulegende Abdeckungsteil 40-1 mit einem Kupplungselement 58 wirkt dann während der Montage sinngemäß mit diesem Gegenkupplungselement 60 zusammen, wie anhand von Fig. 4 beschrieben.

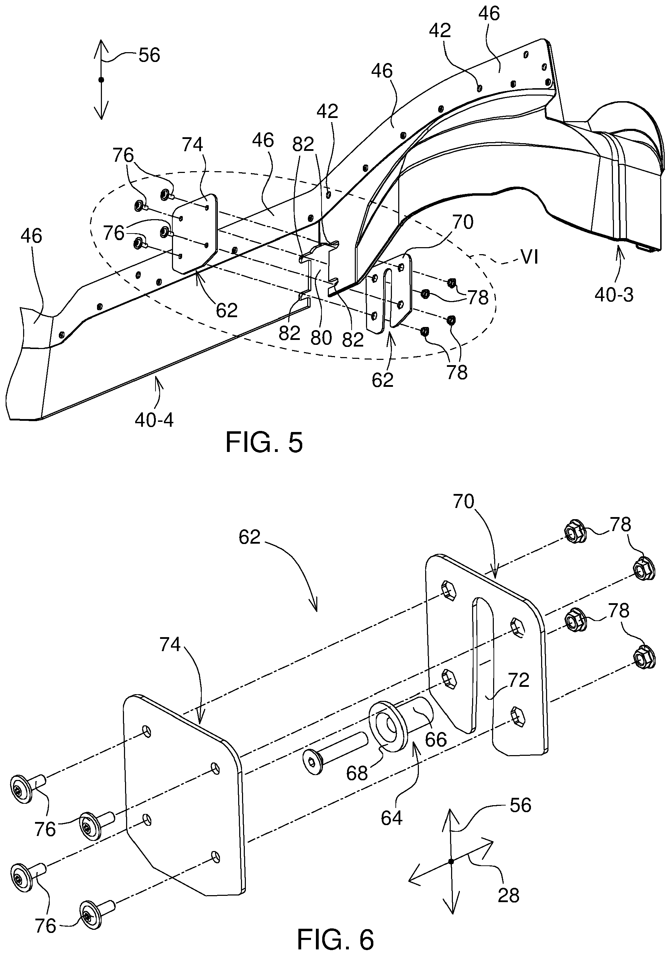

Fig. 5 zeigt im Bereich des Details VI eine Fixiervorrichtung 62 im demontierten Zustand. Sie weist unter anderem zwei noch zu beschreibende plattenartige Bauteile auf. Sie dient einerseits einer Bewegungsführung der kabinenseitig befestigten Abdeckungsteile 40-3, 40-4 entlang der Hochrichtung 56 und andererseits einer Bewegungsbegrenzung dieser Abdeckungsteile 40-3, 40-4 in Querrichtung 28. Die Bewegungsführung entlang der Hochrichtung 56 vermeidet etwaige Beeinträchtigungen der Abdeckung 38 bei Relativbewegungen zwischen der Kabine 22 und der Tragstruktur 26 in Hochrichtung 56. Die Bewegungsbegrenzung in Querrichtung 28 begrenzt den Abstand zwischen den Abdeckungsteilen 40-1 und 40-3 in Querrichtung 28, so dass über diesen Abstand keine nennenswerte Ansammlung 34 von Schmutz und dergleichen in den Spalt 30 gelangen kann.

Die Fixiervorrichtung 62 weist ein Begrenzungselement 64 auf, welches an der Tragstruktur 26 in Querrichtung 28 unbeweglich befestigt ist. Es hat einen sich in Querrichtung 28 erstreckenden zylindrischen Abschnitt 66, der an seinem Freiende einen Begrenzungsanschlag 68 trägt. Der scheibenförmige Begrenzungsanschlag 68 ist etwa lotrecht zur Querrichtung 28 ausgerichtet.

Im Montagezustand der Fixiervorrichtung 62 ist eine Begrenzungsplatte 70 mit den Abdeckungsteilen 40-3, 40-4 verbunden und etwa lotrecht zur Querrichtung 28 ausgerichtet. Bei Bewegungen dieser Abdeckungsteile 40-3, 40-4 in Querrichtung 28 ist die Begrenzungsplatte 70 von dem Begrenzungsanschlag 68 flankiert. Letzterer begrenzt folglich Bewegungen der Begrenzungsplatte 70 und somit auch der Abdeckungsteile 40-3, 40-4 in Querrichtung 28.

Die Begrenzungsplatte 70 weist eine etwa in Hochrichtung 56 verlaufende Plattenaussparung 72 auf, welche den Abschnitt 66 des Begrenzungselements 64 beweglich umgibt. Hierdurch ist im Montagezustand der Abdeckung 38 deren geführte Beweglichkeit gewährleistet, wenn Relativbewegungen zwischen der Kabine 22 und der Tragstruktur 26 auftreten.

Im Montagezustand ist die Begrenzungsplatte 70 mit einer planparallelen Deckplatte 74 lösbar verbunden. Für diese Verbindung dienen vier Schrauben 76 und korrespondierende Schraubenmuttern 78. Die beiden Platten 70, 74 wirken dann nach Art zweier Klemmbacken, die zwischen sich das Abdeckungsteil 40-3 und das Abdeckungsteil 40-4 lösbar klemmfixieren. Diese Klemmfixierung verbindet die Abdeckungsteile 40-3, 40-4 im Montagezustand mit der Begrenzungsplatte 70.

Die Deckplatte 74 deckt im Arbeitseinsatz des Traktors 10 die Plattenaussparung 72 in Querrichtung 28 wirksam ab, so dass im Bereich der Plattenaussparung 72 keine Ansammlung 34 von Schmutz und dergleichen in den Spalt 30 gelangen kann. In einem aneinander angrenzenden Bereich sind die beiden Abdeckungsteile 40-3 und 40-4 von Aussparungen 80, 82 durchsetzt (Fig. 5), um die vorbeschriebene Funktionalität der Fixiervorrichtung 62 zu unterstützen. Die langlochartigen Aussparungen 82 ermöglichen eine Montagejustierung der Abdeckungsteile 40-3 und 40-4 entlang der Längsrichtung 48.

## Patentansprüche

1. Traktor (10) mit einer Kabine (22) und mit einer Tragstruktur (26), an der eine entlang einer Querrichtung (28) verlaufende Hinterachse (12) des Traktors (10) gelagert ist,
wobei
- mindestens ein kabinenseitiger Abschnitt (14) des Traktors (10) und mindestens ein tragstrukturseitiger Abschnitt (16) des Traktors (10) im Bereich der Hinterachse (12) ein Radhaus (18) für ein Hinterrad begrenzt, **dadurch gekennzeichnet, dass**
- das Radhaus (18) an einzelnen Begrenzungsflächen mindestens einen Spalt (30) aufweist, welcher mittels einer Abdeckung (38) zumindest in Querrichtung (28) wirksam abgedeckt ist.

2. Traktor nach Anspruch 1, **dadurch gekennzeichnet, dass** die Abdeckung (38) lösbar befestigt ist.

3. Traktor nach Anspruch 1 oder 2, **dadurch gekennzeichnet, dass** die Abdeckung (38) kabinenseitig (22) und/oder tragstrukturseitig (26) befestigt ist.

4. Traktor nach einem der vorhergehenden Ansprüche, **dadurch gekennzeichnet, dass** die Abdeckung (38) mehrere Abdeckungsteile (40-1, 40-2, 40-3, 40-4) aufweist, welche einzeln kabinenseitig (22) und/oder tragstrukturseitig (26) befestigbar sind.

5. Traktor nach Anspruch 4, **dadurch gekennzeichnet, dass** mindestens ein Abdeckungsteil (40-3, 40-4) elastisch ausgebildet ist.

6. Traktor nach Anspruch 4 oder 5, **dadurch gekennzeichnet, dass** ein kabinenseitig (22) befestigtes Abdeckungsteil (40-3) und ein tragstrukturseitig (26) befestigtes Abdeckungsteil (40-1) entlang einer Hochrichtung (56) des Traktors (10) in gegenseitiger beweglicher Überlappung angeordnet sind.

7. Traktor nach einem der Ansprüche 4 bis 6, **dadurch gekennzeichnet, dass** die Abdeckung (38) im Montagezustand zumindest teilweise formschlüssig an einem kabinenseitigen (22) und/oder tragstrukturseitigen (26) Bestandteil des Traktors (10) angeordnet ist.

8. Traktor nach einem der Ansprüche 4 bis 7, **dadurch gekennzeichnet, dass** ein Abdeckungsteil (40-1) ein Kupplungselement (58) trägt, welches mit einem am Traktor (10) fixierten Gegenkupplungselement (60) nach Art einer in Längsrichtung (48) des Traktors (10) wirksamen mechanischen Kupplung korrespondiert.

9. Traktor nach einem der Ansprüche 4 bis 8, **dadurch gekennzeichnet, dass** ein tragstrukturseitig (26) befestigtes Begrenzungselement (64) einen etwa lotrecht zur Querrichtung (28) des Traktors (10) ausgerichteten Begrenzungsanschlag (68) zur Begrenzung von Bewegungen mindestens eines Abdeckungsteiles (40-3, 40-4) in Querrichtung (28) aufweist.

10. Traktor nach Anspruch 9, **dadurch gekennzeichnet, dass** der Begrenzungsanschlag (68) eine etwa lotrecht zur Querrichtung (28) des Traktors (10) ausgerichtete Begrenzungsplatte (70) flankiert, welche mit mindestens einem Abdeckungsteil (40-3, 40-4) verbunden ist.

11. Traktor nach Anspruch 10, **dadurch gekennzeichnet, dass** die Begrenzungsplatte (70) eine etwa in Hochrichtung (56) des Traktors (10) verlaufende Plattenaussparung (72) aufweist, welche das Begrenzungselement (64) für eine Relativbeweglichkeit etwa entlang der Hochrichtung (56) beweglich umgibt.

12. Traktor nach Anspruch 10 oder 11, **dadurch gekennzeichnet, dass** die Begrenzungsplatte (70) und eine Deckplatte (74) miteinander lösbar verbunden sind und nach Art zweier Klemmbacken zwischen sich mindestens ein Abdeckungsteil (40-3, 40-4) klemmfixieren.

## Claims

1. Tractor (10) having a cab (22) and having a supporting structure (26) on which a rear axle (12), extending along a transverse direction (28), of the tractor (10) is mounted,
wherein
- at least one cab-side portion (14) of the tractor (10) and at least one supporting-structure-side portion (16) of the tractor (10) in the region of the rear axle (12) delimit a wheel housing (18) for a rear wheel,
**characterized in that**
the wheel housing (18) has, at individual boundary surfaces, at least one gap (30) which is effectively covered by means of a cover (38) at least in the transverse direction (28).

2. Tractor according to Claim 1, **characterized in that** the cover (38) is releasably fastened.

3. Tractor according to Claim 1 or 2, **characterized in that** the cover (38) is fastened on the cab side (22) and/or on the supporting-structure side (26).

4. Tractor according to one of the preceding claims, **characterized in that** the cover (38) has a plurality of cover parts (40-1, 40-2, 40-3, 40-4), which are individually fastenable on the cab side (22) and/or on the supporting-structure side (26).

5. Tractor according to Claim 4, **characterized in that** at least one cover part (40-3, 40-4) is resilient.

6. Tractor according to Claim 4 or 5, **characterized in that** a cover part (40-3) fastened on the cab side (22) and a cover part (40-1) fastened on the supporting-structure side (26) are arranged so as to movably overlap one another along a vertical direction (56) of the tractor (10).

7. Tractor according to one of Claims 4 to 6, **characterized in that** the cover (38), in the assembled state, is arranged at least partially in a form-fitting manner on a component of the tractor (10) on the cab side (22) and/or on the supporting-structure side (26).

8. Tractor according to one of Claims 4 to 7, **characterized in that** a cover part (40-1) bears a coupling element (58) which corresponds to a mating coupling element (60), fixed to the tractor (10), in the manner of a mechanical coupling that is effective in the longitudinal direction (48) of the tractor (10).

9. Tractor according to one of Claims 4 to 8, **characterized in that** a limit element (64) fastened on the supporting-structure side (26) has a limit stop (68), oriented approximately perpendicularly to the transverse direction (28) of the tractor (10), for limiting movements of at least one cover part (40-3, 40-4) in the transverse direction (28).

10. Tractor according to Claim 9, **characterized in that** the limit stop (68) flanks a limit plate (70) which is oriented approximately perpendicularly to the transverse direction (28) of the tractor (10) and which is connected to at least one cover part (40-3, 40-4).

11. Tractor according to Claim 10, **characterized in that** the limit plate (70) has a plate recess (72) which extends approximately in the vertical direction (56) of the tractor (10) and which movably surrounds the limit element (64) for relative mobility approximately along the vertical direction (56).

12. Tractor according to Claim 10 or 11, **characterized in that** the limit plate (70) and a cover plate (74) are connected releasably together and clampingly fix at least one cover part (40-3, 40-4) between one another in the manner of two clamping jaws.

## Revendications

1. Tracteur (10) comprenant une cabine (22) et comprenant une structure porteuse (26) sur laquelle est monté un essieu arrière (12) du tracteur (10) s'étendant le long d'une direction transversale (28),
- au moins une section du côté de la cabine (14) du tracteur (10) et au moins une section du côté de la structure porteuse (16) du tracteur (10) délimitant un passage de roue (18) pour une roue arrière dans la zone de l'essieu arrière (12), **caractérisé en ce que**
- le passage de roue (18) présente au moins une fente (30) sur certaines surfaces de délimitation, laquelle est recouverte efficacement au moyen d'un couvercle (38) au moins dans la direction transversale (28).

2. Tracteur selon la revendication 1, **caractérisé en ce que** le couvercle (38) est fixé de manière amovible.

3. Tracteur selon la revendication 1 ou 2, **caractérisé en ce que** le couvercle (38) est fixé du côté de la cabine (22) et/ou du côté de la structure porteuse (26).

4. Tracteur selon l'une quelconque des revendications précédentes, **caractérisé en ce que** le couvercle (38) présente plusieurs parties de couvercle (40-1, 40-2, 40-3, 40-4) qui peuvent être fixées individuellement du côté de la cabine (22) et/ou du côté de la structure porteuse (26) .

5. Tracteur selon la revendication 4, **caractérisé en ce qu'**au moins une partie de couvercle (40-3, 40-4) est configurée sous forme élastique.

6. Tracteur selon la revendication 4 ou 5, **caractérisé en ce qu'**une partie de couvercle (40-3) fixée du côté de la cabine (22) et une partie de couvercle (40-1) fixée du côté de la structure porteuse (26) sont agencées en chevauchement mobile mutuel le long d'une direction verticale (56) du tracteur (10).

7. Tracteur selon l'une quelconque des revendications 4 à 6, **caractérisé en ce qu'**à l'état monté, le couvercle (38) est agencé au moins partiellement par complémentarité de forme sur un constituant du tracteur (10) du côté de la cabine (22) et/ou du côté de la structure porteuse (26).

8. Tracteur selon l'une quelconque des revendications 4 à 7, **caractérisé en ce qu'**une partie de couvercle (40-1) porte un élément d'accouplement (58) qui correspond à un élément d'accouplement complémentaire (60) fixé au tracteur (10) à la manière d'un accouplement mécanique agissant dans la direction longitudinale (48) du tracteur (10) .

9. Tracteur selon l'une quelconque des revendications 4 à 8, **caractérisé en ce qu'**un élément de limitation (64) fixé du côté de la structure porteuse (26) présente une butée de limitation (68) orientée approximativement perpendiculairement à la direction transversale (28) du tracteur (10) pour limiter les mouvements d'au moins une partie de couvercle (40-3, 40-4) dans la direction transversale (28).

10. Tracteur selon la revendication 9, **caractérisé en ce que** la butée de limitation (68) est flanquée d'une plaque de limitation (70) orientée approximativement perpendiculairement à la direction transversale (28) du tracteur (10), laquelle est reliée à au moins une partie de couvercle (40-3, 40-4).

11. Tracteur selon la revendication 10, **caractérisé en ce que** la plaque de limitation (70) présente un évidement de plaque (72) s'étendant approximativement dans la direction verticale (56) du tracteur (10), qui entoure l'élément de limitation (64) de manière mobile pour une mobilité relative approximativement le long de la direction verticale (56).

12. Tracteur selon la revendication 10 ou 11, **caractérisé en ce que** la plaque de délimitation (70) et une plaque de recouvrement (74) sont reliées l'une à l'autre de manière amovible et fixent par serrage entre elles au moins une partie de couvercle (40-3, 40-4) à la manière de deux mâchoires de serrage.
